# EUROPEAN PATENT SPECIFICATION

(11) **EP 2 046 126 B1**
(45) Date of publication and mention of the grant of the patent: **26.08.2015**
(21) Application number: 07810716.6
(22) Date of filing: 23.07.2007
(51) Int. Cl.: A01N 43/80, A01N 25/02

(54) **STABLE, LOW VOC, LOW VISCOUS BIOCIDAL FORMULATIONS AND METHOD OF MAKING SUCH FORMULATIONS**
STABILE BIOZIDE FORMULIERUNGEN MIT NIEDRIGEM VOC UND GERINGER VISKOSITÄT SOWIE VERFAHREN ZUR HERSTELLUNG SOLCHER FORMULIERUNGEN
FORMULATIONS BIOCIDES STABLES, À FAIBLE TENEUR EN COMPOSÉS ORGANIQUES VOLATILS (COV), À FAIBLE VISCOSITÉ ET PROCÉDÉ DE FABRICATION DE TELLES FORMULATIONS

(30) Priority: 25.07.2006 US 833160 P
(43) Date of publication of application: 15.04.2009
(73) Proprietor: Dow Global Technologies LLC, Midland, MI 48674 (US)
(72) Inventor: LENOIR, Pierre, Marie, CH-ZH-8805 Richterswil (CH); SIEGRIST, Irene, CH-8712 Staefa (CH)
(74) Representative: Beck Greener
(86) International application number: PCT/US2007/016597
(87) International publication number: WO 2008/013784

(56) References cited:
- EP-A- 0 988 789
- EP-A2- 1 767 091
- WO-A-2004/103342
- WO-A-2005/102324
- GB-A- 2 004 747

## Description

### Field of the Invention

The invention relates to stable biocide formulations which contain 1,2-benzisothiazolin-3-one ("BIT") and polyglycols. The new formulations exhibit one or more of the following properties: low volatile organic carbons ("VOCs"), low viscosities, near neutral to acidic pH, and good freeze-thaw stability. The new formulations of BIT, with or without one or more additional biocides, are advantageous for use in latex, paint, coating, leather, metal working fluids, cosmetic, and personal care products for controlling the undesired microbial growth in those media.

### Background of the Invention

BIT, as shown below, is a well known biocide that has been used over a number of years to protect aqueous media against microorganisms including bacteria. For example, BIT is a preferred in-can biocide to preserve the acrylic and acrylate paint emulsions for an extended period of time.

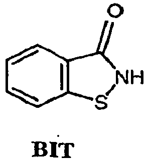

Even though BIT is used to protect aqueous media against microbiological spoilage and deterioration, BIT has a limited solubility in water. Various methods have been developed to improve the formulation of BIT. U.S. Patent Application No. 2005/0220830 ("the '830 application") summarizes the previous attempts to solve the problem by developing various formulations of BIT. The disadvantages of those BIT formulations include presence of amines, lack of low temperature stability, too high a viscosity to pour the solutions, high pH which can cause pH shock when added to latex or to other applications, and presence of high amounts of volatile components that result in high VOCs of the final formulations.

U.S. Patent Application No. 2005/0220830 disclosed a neutral pH, VOC-free biocide formulation comprising an effective amount of BIT in polyethylene glycol ("PEG") of molecular weight (Mw) of 400 ("PEG-400") or more. A preferred formulation is composed of about 0.1-30 wt. % BIT, about 20-90 wt. % PEG-400 and 0-3 wt. % alkali metal hydroxide, and about 0-15 wt. % water. The most preferred formulation has 20 wt. % BIT, 70 wt. % PEG-400, 2.1 wt. % sodium hydroxide, and 7.9 wt. % water. The improved formulations are stated to be stable at temperatures as low as -20 °C for an extended period of time.

A drawback of the PEG-400 based BIT formulations is that the formulation has a higher viscosity. The higher viscosity of the BIT formulations is disadvantageous for handling by the end-user of the BIT formulation especially at a low temperature.

Therefore, there is a need for stable biocide formulations in near neutral to acidic pH ranges comprising effective concentration of BIT or other biocides that exhibit low viscosity, low VOCs, and stability at low temperature.

More specifically, there exists a need for a liquid carrier system to solubilize BIT, with or without one or more additional biocides, in a near neutral to acidic pH, that has a relatively low viscosity to facilitate easy pouring of the solution, that does not freeze at low temperatures, and that has low or no VOC components present in such liquid carrier system.

### SUMMARY OF THE INVENTION

According to one aspect of the invention, a formulation is provided comprising an effective amount of a biocide, 1,2-benzisothiazolin-3-one (BIT), and a polyglycol liquid carrier of formula (I): R-O-(AO)ₙ-O-R', wherein n is 4-25, preferably 5-20, more preferably 6-15, R and R' are independently hydrogen, C₁-C₃ alkyl groups, O=C-CH₃ group, or O=C-C₂H₅ group, and AO is a) CH₂CH₂O, or b) CH₂CH₂O /CH₂CHMe-O block or random copolymer wherein R and R' are not simultaneously alkyl groups, with proviso that when R and R' are both hydrogen, AO is a block or random copolymer.

According to another aspect of the invention, the liquid carrier has the block or random copolymer with more than 50 wt. % of CH₂CH₂O.

According to yet another aspect of the invention, the formulation further comprises alkali metal hydroxide and water.

According to another aspect of the invention, the formulation comprises about 0.1 to 30 wt. % of BIT, about 10 to 80 wt. % of polyglycol of formula (I), less than 5 wt. % of alkali metal hydroxide, and less than 30 wt. % of water.

In one embodiment of the invention, the liquid carrier is Me-O-(CH2CH2O)₆-OH and in another embodiment, the liquid carrier is Me-O-(CH₂CH₂O)₆-OCOCH₃. In a further embodiment, the liquid carrier is Me-O-(CH2CH2O)₁₆-OH or is Me-O-(CH2CH2O)ₙ-OH with a molecular weight of about 750.

In another embodiment, the liquid carrier is formula (I): R-O-(AO)ₙ-O-R', wherein n is 5-10, R is propyl and R' is hydrogen, and AO is CH₂CH₂O.

In another embodiment of the invention, the formulation comprises 15 to 25 wt. %, preferably about 20 wt. % of BIT, about 50 to 60 wt. % of Me-O-(CH2CH2O)₆-OH, about 3 to 4 wt. % of NaOH, and about 15-25 % of water.

According to a further aspect of the invention, the formulation comprises more than one biocide. In one embodiment, the biocides are 1) BIT and 2) one or more of bronopol, methylisothiazolinone (MIT), chloromethylisothiazolinone (CMIT), glutaraldehyde, orthophenylphenol, bromine containing biocides, or formaldehyde releasers such as N- and O-formals, or mixtures of these biocides.

In one aspect of the invention, the pH of the formulation is between 1 to 10. In another aspect of the invention, when a second biocide is added to the formulation and the second biocide is only stable in acid condition, the pH of the formulation may be between 1-7, preferably between 2 to 6.

In yet another aspect of the invention, the viscosity of the formulation is between about 20 to 200 mm²/second at 25 °C., preferably between about 30 to 100 mm²/s at 25 °C., and more preferably between 40 to 80 mm²/s at 25 °C.

In another aspect of the invention, the formulation comprises less than 10 wt. % of volatile organic carbons, preferably less than 7 wt. % of volatile organic carbons, and more preferably less than 5 wt. % of volatile organic carbons.

In yet another aspect of the invention, a method is provided to make a formulation containing an effective amount of at least one biocide, 1,2-benzisothiazolin-3-one (BIT), and a polyglycol liquid carrier of formula (I): R-O-(AO)ₙ-O-R' wherein n is 4-25, R and R' are hydrogen, C₁-C₃ alkyl groups, O=C-CH₃ group, or O=C-C₂H₅ group, and AO is CH₂CH₂O, or CH₂CH₂O /CH₂CHMe-O block or random copolymer; with proviso that when R and R' are both hydrogen, AO is a block or random copolymer and with the proviso that R and R' are not simultaneously alkyl groups, the method comprising: adding the biocide to the polyglycol to form a mixture, and stirring the mixture of biocide and polyglycol.

In another aspect of the invention, the method also includes adding an alkali metal hydroxide and/or water to the mixture of biocide and polyglycol.

In yet another aspect of the invention, the method comprises adding an acid to adjust the pH of the formulation to less than 7. Preferably, the acid is lactic acid.

Other exemplary embodiments and advantages of the invention may be ascertained by reviewing the present disclosure.

### DETAILED DESCRIPTION OF THE INVENTION.

In the following detailed description, the specific embodiments of the invention are described in connection with its preferred embodiments. However, to the extent that the following description is specific to a particular embodiment or a particular use of the present techniques, it is intended to be illustrative only and merely provides a concise description of the exemplary embodiments. Accordingly, the invention is not limited to the specific embodiments described below, but rather; the invention includes all alternatives, modifications, and equivalents falling within the true scope of the appended claims.

As used herein:
Unless otherwise stated, all percentages, %, are by weight based on the total weight of the formulation.

The "viscosity" is measured using a Schott Ubbelohde capillary viscosimeter at 25 °C and the obtained viscosity is expressed in mm²/s. The viscosimeter is connected with a calculator which transforms the time residence of the formulation into a viscosity number.

The "volatile organic carbon (VOC)" means the amount of organic carbons in the formulation which is volatile and is measured according to the EPA Method 24. It consists of adding to a pre-weighed aluminum dish a small amount of formulation (about 0.5 grams) and about 3 grams of water. The dish is then placed in an oven equilibrated at 110 °C for one hour. The dish is then removed from the oven and placed in a dessicator to allow cooling to the room temperature. The dish is weighed again and the VOC content of the formulation can be determined.

The pH is measured using a reference KCl pH electrode. The electrode is calibrated before any measurement using buffer standard solutions of pH 4, pH 7 and pH 10 from Riedel de Haen. The pH is measured at room temperature.

The freeze-thaw stability test is a 5-cycle storage test. One freeze-thaw cycle consists of placing the formulation samples at -15 °C for 18 hours (freeze step) followed by a thawing step without any shaking for 6 hours at room temperature. The samples are observed at the end of the freezing and of the thawing step. A stable sample means that the sample is a clear homogeneous sample free of any visible precipitate traces or inhomogeneous lines. The duration of the test is five days.

The invention provides a liquid carrier system for a formulation of at least one biocide, BIT. The solution is stable, and has near neutral to acidic pH, with low viscosity, low VOC, and low temperature stability. In one embodiment, the invention provides a BIT formulation with certain polyglycols of a preferred molecular weight (MW) of above 300 but less than 1000, preferably between 300 and 800. The present formulation overcomes the shortcomings of the BIT formulations disclosed in US 2005/0220830. It is discovered that using the polyglycol based liquid carriers of the invention, a BIT formulation, of lower viscosity, near neutral to acidic pH, low VOCs, and superior freeze-thaw stability can be prepared.

The BIT formulations of the invention are advantageous in protecting against microbial growth in aqueous based systems. The formulations are particularly advantageous for protecting against microbial growth in latexes, paint formulations, coatings, mineral slurries, cosmetics, household or personal care formulations, metal working fluids, and pulp and paper mill samples. It has been demonstrated in Example 2 of U.S. Patent Publication No. 2005/0220830 that a 20 wt. % BIT formulation provides an effective amount of biocides in paint applications. It is expected that similar concentrations of biocide will be effective in other applications to control the microbial growth.

The invention utilizes polyglycols of formula R-O-(AO)n-O-R' as effective liquid carriers to provide near neutral to acidic pH BIT formulations with low viscosity, low VOC, and low temperature stability of the BIT formulations. In this formula, n may be equal to or above 4, preferably equal to or above 5, and more preferably equal to or above 6. In the formula, n is also equal to or less than 25, preferably equal to or less than 20, and more preferably equal to or less than 15. Also in this formula, R and R' may be hydrogen, a C₁-C₃ alkyl group, a O=C-CH₃ group, or a O=C-C₂H₅ group, and AO may be a) CH₂CH₂O, or b) a CH₂CH₂O /CH₂CHMe-O block or random copolymer; with proviso that when R and R' are both hydrogen, AO is a block or random copolymer. R and R' are not simultaneously alkyl groups.

In one embodiment of the invention, the preferred liquid carrier is MeO-(CH₂CH₂O)₆-OH with a molecular weight of about 350 ("MPEG-350"). In another embodiment, the preferred liquid carrier is MeO-(CH₂CH₂O)₆-OCOCH₃. It is found that when R and R' are both hydrogen, and AO is CH₂CH₂O, for example the PEG-400 liquid carrier disclosed in US 2005/0220830, the resulting BIT formulation will have a high viscosity. In contrast, we have found that the presence of R, and R' as short alkyl groups and/or the presence of CH₂CHMe-O in the AO moiety will greatly reduce the viscosity of BIT formulations. We speculate that this may be due to a possible reduction of the intermolecular H-bonds. The reduction of viscosity is accomplished without compromising the efficiency of the liquid carrier to solubilize BIT (in absence of alkali).

However, when R or R' is too large, such as C₄ or above, the degree of intermolecular H-bonding between the polyglycol molecules decreases further compared to smaller R or R' groups. Therefore, when the amount of AO chain content in the polyglycol formula (I) is similar, polyglycols having short R or R' alkyl groups (C₁-C₃) will have less volatile components than polyglycols having C₄ or higher alkyl chains. In one test, the VOC content of MPEG-350 (R is a C₁ alkyl and R' is hydrogen) is measured at about 5.9 wt. % while the VOC of a polyglycol with R being C₄ alkyl is measured at about 25 wt. %. Because of this, polyglycols with short R or R' alkyl groups (C₁-C₃) may contain less VOC and are probably less odorous.

In addition, when R or R' is too large, such as C₄ or above, polyglycols are more hydrophobic and therefore not as efficient as a BIT solubilizer compared to a more hydrophilic polyglycol. A formulation having polyglycols based on C₄ and higher alkyl groups requires more caustic to solubilize all the BIT especially when formulations contain a high level of BIT, i.e. 20 % and above.

In one embodiment of the invention when AO is the block or random copolymer, the block or random copolymer comprises more than 50 wt. % of CH₂CH₂O.

In one embodiment of the invention, alkali metal hydroxide and water are used in the BIT formulation. The alkali metal hydroxide may be one or more of lithium, sodium or potassium hydroxide, but preferably, sodium hydroxide. The alkali metal hydroxide concentration of the invention may be less than 5.5 wt. %, preferably less than 5 wt. %, more preferably less than 4 wt. %. In a further embodiment, about 3 to 4 wt. % of the alkali metal hydroxide may be used.

The BIT concentration of the invention may be more than 0.1 wt. %, preferably more than 10 wt. %, and more preferably more than 15 wt. % of the formulation. The biocide concentration is also less than 30 wt. %, preferably less than 25 wt. %, and more preferably less than 30 wt. % of the formulation. The BIT concentration is most preferably about 20 wt. % of the formulation.

The concentration of polyglycol liquid carriers of the invention is usually more than 10 wt. %, preferably more than 30 wt. %, more preferably more than 40 wt. %, and most preferably more than 50 wt. % of the formulation. The concentration of polyglycol liquid carriers of the invention is also usually less than 80 wt. %, preferably less than 75 wt. %, more preferably less than 70 wt. %, and most preferably less than 60 wt. % of the formulation.

The remaining portion of the formulation usually comprises water and, in some embodiments, acid and water in order to maintain a proper pH of the formulation.

One advantage of the BIT formulations of the invention is their pH above 1 but less than 10. When a second biocide is added to the formulation and the second biocide is only stable in acid condition, the pH of the formulation may be between 1-7, preferably between 2 to 6. A BIT formulation with pH less than 10 will lesson the pH shock when added to latex or paint formulations.

The viscosity of the formulations of the invention is usually more than 20 mm²/second at 25 °C, preferably more than 30 mm²/second at 25 °C, and more preferably more than 40 mm²/second at 25 °C. The viscosity of the formulations of the invention is also usually less than 200 mm²/second at 25 °C, preferably less than 100 mm²/second, and more preferably less than 80 mm²/second at 25 °C.

The volatile organic contents (VOCs) of the formulations of the invention is usually less than 10 wt. %, preferably less than 7 wt. %, and more preferably less than 5 wt. % of the formulation.

In another embodiment of the invention, a low viscosity formulation containing BIT and one or more of other biocides in the same liquid carrier system is provided at near neutral to acidic pH and the same superior properties: low VOC, stable, low viscosity, etc. The one or more of biocides may be bronopol, methylisothiazolinone (MIT), chloromethylisothiazolinone (CMIT), glutaraldehyde, orthophenylphenol, bromine containing biocides, or formaldehyde releasers such as N- and O-formals, or mixtures of these biocides. An acid may be used to adjust the pH of the formulation when there is more than one biocide in the formulation. The acid used can be any organic or inorganic acid suitable for achieving the desired pH, i.e. a pH below which the second biocide displays a good chemical stability. In a preferred embodiment, lactic acid is used since lactic acid will not contribute to the VOC content of the formulation. Upon removal of water, lactic acid polymerizes to form an inert ingredient. Lactic acid also helps in solubilizing BIT in the formulation.

For example, it is found that a formulation having 9 wt. % BIT, 9 wt. % bronopol, 1 wt. % D,L-lactic acid, 78 wt % MPEG-350 and 3 wt. % water is stable, is low VOC, has low (or light) color and has low viscosity. The pH value is between 4-5. The main advantages of this formulation are clarity and low viscosity. Similar BIT/Bronopol formulation products currently available on the market are all dispersions having high viscosities.

To prepare the BIT formulations of the invention, it is preferred to add all of the biocides to the desired liquid carrier such as MPEG-350 to form a mixture, stir the mixture, add water if needed, and add all of the desired caustic, if needed. One of the advantages of such a process is that the resulting biocide formulation will have a low or lighter color. If a different method is used to prepare the formulation, the resulting formulation may have a high or darker color. For instance, higher colored formulation is expected when caustic is added to the polyglycol first (or vice-versa) and then BIT is added at the end after some contact time between polyglycol and caustic. A low or lighter color is preferred to minimize color interference when the biocide formulation is added to other media (e.g. paint) in applications.

The invention can be further illustrated by the following examples and comparative studies:

### EXAMPLE 1

Two formulations of the invention with single biocide of BIT are prepared with the following components. MPEG-350 is obtained as Carbowax^{™} MPEG-350 from The Dow Chemical Company.

| Sample Nos. | wt. % BIT | wt. % caustic | wt. % MPEG-350 | wt. % water |
|---|---|---|---|---|
| B₁ | 20 | 3 | 57.72 | 19.28 |
| B₂ | 20 | 3 | 52.72 | 24.28 |

These two samples are compared to 1) a commercially available product ("Proxel® GXL" - a registered trademark of Avecia/Arch) ("Sample No. D₁) and 2) the most preferred formulation prepared in accordance to the disclosure of U.S. Patent Application No. 2005/0220830 ("Sample No. D₂"). It is found that if only 50-60 wt. % of PEG-400 is used as a carrier, the 20 wt. % BIT formulation will not be stable and will have crystals. Therefore, a higher amount of PEG-400, about 70 %, is needed for D₂ sample.

| Sample Nos. | Sample Source | wt. % BIT | wt. % caustic | Liquid carriers | wt. % Water |
|---|---|---|---|---|---|
| D₁ | Proxel® GXL | 20 | about 5 | >50 wt % of dipropyleneglycol | about 25 |
| D₂ | Prepared from the '830 application | 20 | 3 | 70 wt. % of PEG-400 | 7 |

The following table illustrates the comparative studies on viscosity and pH:

| Samples | Viscosity at 25°C (mm²/s) | pH at room temp. |
|---|---|---|
| B₁ | 64.43 | 8.53 |
| B₂ | 47.57 | 8.39 |
| D₁ | 183.96 | 12.99 |
| D₂ | 229.49 | 8.25 |

BIT formulations based on MPEG-350 as the liquid carrier, sample Nos. B₁ and B₂, exhibit a much lower viscosity and pH compared to 1) Proxel GXL sample and a much lower viscosity as compared to 2) the PEG-400 based BIT formulations.

The table below provides observations of a comparative study on the freeze-thaw stability between the formulations of the invention (Samples B₁ and B₂) and PEG-400 based BIT formulations, prepared in accordance to the teachings of US Patent Publication No. 2005/0220830 (Sample Nos. C₁ and C₂). The only differences between B and C samples are that B samples use MPEG-350 as liquid carriers and C samples use PEG-400 as liquid carrier. The weight percentages of the liquid carriers in all B and C samples are the same.

| Samples | Cycle 1 | Cycle 2 | Cycle 3 | Cycle 4 | Cycle 5 |
|---|---|---|---|---|---|
| B₁ | no crystals | no crystals | no crystals | no crystals | no crystals |
| B₂ | no crystals | no crystals | no crystals | very few crystals | very few crystals |
| C₁ | some crystals | some crystals | some crystals | some crystals | some crystals |
| C₂ | more crystals | more crystals | more crystals | more crystals | 1/8 of volume is made of crystals |

The compositions of C₁ and C₂ are displayed in the table below.

| Sample Nos. | wt. % BIT | wt. % caustic | wt. % PEG-400 | wt. % water |
|---|---|---|---|---|
| C₁ | 20 | 3 | 57.72 | 19.28 |
| C₂ | 20 | 3 | 52.72 | 24.28 |

Clearly, the formulations based on MPEG-350 (B₁ and B₂) display a better freeze-thaw stability compared to the same formulations when MPEG-350 is substituted by PEG-400 (from '380 application) i.e. the formulations C₁ and C₂. Even when crystallization occurs in the BIT formulations containing MPEG-350, its extent is always rather low and hardly visible. In contrast, the PEG-400 based formulations have crystals from the beginning of the test. As discussed above, in order to avoid the stability problems, a formulation in the '380 application must use about 70 wt. % of PEG-400. Therefore, it is concluded that a BIT formulation based on MPEG-350 can contain about 10 wt. % more water than that used in a PEG-400 based formulation. This may further reduce the cost since water is less expensive than the liquid carriers. More water further means that the formulation will have lower viscosity, which is highly desired in biocide applications.

The following table illustrates the VOCs concentrations of B₁ and B₂ of the invention:

| Samples | VOCs in wt. % in the formulation |
|---|---|
| B₁ | 3.4 |
| B₂ | 3.1 |

### EXAMPLE 2

One formulation of the invention with contains two biocides is prepared with the following components:

| Sample No. | wt. % BIT | wt. % bronopol | wt. % of lactic acid | wt. % MPEG-350 | wt. % water |
|---|---|---|---|---|---|
| B₃ | 9 | 9 | 1 | 78 | 3 |

Sample B₃ of the invention is compared to ROCIMA® 607, from Rohm & Haas, which contains 12 wt. % BIT, 10 wt. % bronopol, and 78 wt. % of water and other inert ingredients. ROCIMA® 607 does not contain the liquid carrier of the invention. It is found that ROCIMA® 607 is a dispersion formulation while B₃ is a clear solution with low viscosity.

### EXAMPLE 3

An illustration of a formulation containing CARBOWAX MPEG 750 (an MPEG of 750 molecular weight available from The Dow Chemical Company) is as follows:

| Sample Nos. | wt. % BIT | wt. % caustic | wt. % MPEG-750 | wt. % water |
|---|---|---|---|---|
| B₃ | 18.52 | 3 | 64.8 | balance |

The prepared formulation is clear, indicating good solubility of the BIT. The pH of the formulation is about 8.2 and the maximum VOC content is 0.5 %.

## Claims

1. A formulation comprising 1,2-benzisothiazolin-3-one (BIT), and a polyglycol liquid carrier of formula (I):
R-O-(AO)ₙ-R'
wherein
n is 4-25;
R and R' are independently hydrogen, C₁-C₃ alkyl groups, O=C-CH₃ group, or O=C-C₂H₅ group; and
AO is a) CH₂CH₂O, or b) CH₂CH₂O /CH₂CHMe-O block or random copolymer; wherein R and R' are not simultaneously alkyl groups,
with proviso that when R and R¹ are both hydrogen, AO is a block or random copolymer.

2. The formulation according claim 1, wherein the block or random copolymer comprises more than 50 wt. % of CH₂CH₂O.

3. The formulation according to any one of claims 1 to 2 further comprising alkali metal hydroxide and/or water.

4. The formulation according to any one of claims 1 to 3 comprising:
about 0.1 to 30 wt. % of BIT,
about 10 to 80 wt. % of polyglycol of formula (I),
less than 5 wt. % of alkali metal hydroxide, and
less than 30 wt. % of water.

5. The formulation according to any one of the claims 1 to 4 wherein the liquid carrier is Me-O-(CH2CH2O)₆-H.

6. The formulation according to claim 5 comprising:
about 15 to 25 wt. % of BIT,
about 50 to 60 wt. % of Me-O-(CH2CH2O)₆-H,
about 3 to 4 wt. % of NaOH, and
about 15-25 % of water.

7. The formulation according to any one of claims 1 to 4, wherein the liquid carrier is MeO-(CH₂CH₂O)₆-COCH₃.

8. The formulation according to any one of claims 1 to 4, wherein in the liquid carrier of formula (I):
n is 5-10,
R is propyl and R' is hydrogen, and
AO is CH₂CH₂O.

9. The formulation according to any one of claims 1 to 8 comprising more than one biocide.

10. The formulation according to claims 1-9 further comprising one or more additional biocides selected from bronopol, methylisothiazolinone (MIT), chloromethylisothiazolinone (CMIT), glutaraldehyde, orthophenylphenol, bromine containing biocides, or formaldehyde releasers such as N- and O-formals, and mixtures of two or more of these biocides.

11. A method of making the formulation of claim 1, the method comprising:
adding the biocide to the polyglycol to form a mixture, and
stirring the mixture of biocide and polyglycol.

12. A method of inhibiting the growth of microorganisms in an aqueous-based system, the method comprising adding to said system an effective amount of a formulation according to any one of claims 1-11.

13. A method according to claim 12 wherein the aqueous based system is selected from latexes, paint formulations, coatings, mineral slurries, cosmetics, household or personal care formulations, metal working fluids, and pulp and paper mill samples.

14. A formulation according to claim 1 wherein the liquid carrier is Me-O-(CH₂CH₂O)₁₆-H.

## Patentansprüche

1. Eine Formulierung, beinhaltend 1,2-Benzisothiazolin-3-on (BIT) und einen flüssigen Polyglykolträger der Formel (I):
R-O-(AO)ₙ-R'
wobei
n 4-25 ist;
R und R' unabhängig Wasserstoff, C₁-C₃-Alkylgruppen, O=C-CH₃-Gruppe oder O=C-C₂H₅-Gruppe sind; und
AO a) CH₂CH₂O oder b) Blockcopolymer oder statistisches Copolymer aus CH₂CH₂O/CH₂CHMe-O ist;
wobei R und R' nicht gleichzeitig Alkylgruppen sind,
mit der Maßgabe, dass wenn R und R' beide Wasserstoff sind, AO ein Blockcopolymer oder statistisches Copolymer ist.

2. Formulierung gemäß Anspruch 1, wobei das Blockcopolymer oder statistische Copolymer mehr als 50 Gew.-% CH₂CH₂O beinhaltet.

3. Formulierung gemäß einem der Ansprüche 1 bis 2, die ferner Alkalimetallhydroxid und/oder Wasser beinhaltet.

4. Formulierung gemäß einem der Ansprüche 1 bis 3, beinhaltend:
etwa 0,1 bis 30 Gew.-% BIT,
etwa 10 bis 80 Gew.-% Polyglykol der Formel (I),
weniger als 5 Gew.-% Alkalimetallhydroxid und
weniger als 30 Gew.-% Wasser.

5. Formulierung gemäß einem der Ansprüche 1 bis 4, wobei der flüssige Träger Me-O-(CH₂CH₂O)₆-H ist.

6. Formulierung gemäß Anspruch 5, beinhaltend:
etwa 15 bis 25 Gew.-% BIT,
etwa 50 bis 60 Gew.-% Me-O-(CH₂CH₂O)₆-H,
etwa 3 bis 4 Gew.-% NaOH und
etwa 15-25 % Wasser.

7. Formulierung gemäß einem der Ansprüche 1 bis 4, wobei der flüssige Träger MeO-(CH₂CH₂O)₆-COCH₃ ist.

8. Formulierung gemäß einem der Ansprüche 1 bis 4, wobei in dem flüssigen Träger der Formel (I):
n 5-10 ist,
R Propyl ist und R' Wasserstoff ist und
AO CH₂CH₂O ist.

9. Formulierung gemäß einem der Ansprüche 1 bis 8, die mehr als ein Biozid beinhaltet.

10. Formulierung gemäß den Ansprüchen 1-9, die ferner ein oder mehrere zusätzliche Biozide beinhaltet, die ausgewählt sind aus Bronopol, Methylisothiazolinon (MIT), Chlormethylisothiazolinon (CMIT), Glutaraldehyd, Orthophenylphenol, bromhaltigen Bioziden oder Formaldehydfreisetzern wie etwa N- und O-Formalen und Mischungen von zwei oder mehr dieser Biozide.

11. Ein Verfahren zum Herstellen der Formulierung gemäß Anspruch 1, wobei das Verfahren Folgendes beinhaltet:
Hinzugeben des Biozids zu dem Polyglykol, um eine Mischung zu bilden, und
Rühren der Mischung aus Biozid und Polyglykol.

12. Ein Verfahren zum Inhibieren des Wachstums von Mikroorganismen in einem System auf Wasserbasis, wobei das Verfahren das Hinzugeben einer wirksamen Menge einer Formulierung gemäß einem der Ansprüche 1-11 zu dem System beinhaltet.

13. Verfahren gemäß Anspruch 12, wobei das System auf Wasserbasis ausgewählt ist aus Latizes, Anstrichformulierungen, Beschichtungen, Mineralschlämmen, Kosmetika, Haushalts- oder Körperpflegeformulierungen, Metallverarbeitungsfluiden und Zellstoff- und Papiermühlenproben.

14. Formulierung gemäß Anspruch 1, wobei der flüssige Träger Me-O-(CH₂CH₂O)₁₆-H ist.

## Revendications

1. Une formulation comprenant du 1,2-benzisothiazolin-3-one (BIT), et un véhicule liquide de polyglycol de la formule (I) :
R-O-(AO)ₙ-R'
dans laquelle
n va de 4 à 25 ;
R et R' sont indépendamment de l'hydrogène, des groupes alkyle en C₁-C₃, un groupe O=C-CH₃, ou un groupe O=C-C₂H₅ ; et
AO est un copolymère bloc ou aléatoire a) CH₂CH₂O, ou b) CH₂CH₂O/CH₂CHMe-O ; dans laquelle R et R' ne sont pas simultanément des groupes alkyle,
à la condition que lorsque R et R' sont tous deux de l'hydrogène, AO est un copolymère à blocs ou aléatoire.

2. La formulation selon la revendication 1, dans laquelle le copolymère à blocs ou aléatoire comprend plus de 50 % en poids de CH₂CH₂O.

3. La formulation selon l'une quelconque des revendications 1 à 2 comprenant en outre un hydroxyde de métal alcalin et/ou de l'eau.

4. La formulation selon l'une quelconque des revendications 1 à 3 comprenant :
d'environ 0,1 à 30 % en poids de BIT,
d'environ 10 à 80 % en poids de polyglycol de la formule (I),
moins de 5 % en poids d'hydroxyde de métal alcalin, et
moins de 30 % en poids d'eau.

5. La formulation selon l'une quelconque des revendications 1 à 4 dans laquelle le véhicule liquide est Me-O-(CH2CH2O)₆-H.

6. La formulation selon la revendication 5 comprenant :
d'environ 15 à 25 % en poids de BIT,
d'environ 50 à 60 % en poids de Me-O-(CH2CH2O)₆-H,
d'environ 3 to 4 % en poids de NaOH, et
d'environ 15 à 25 % d'eau.

7. La formulation selon l'une quelconque des revendications 1 à 4, dans laquelle le véhicule liquide est MeO-(CH₂CH₂O)₆-COCH₃.

8. La formulation selon l'une quelconque des revendications 1 à 4, dans lequel dans le véhicule liquide de la formule (I) :
n va de 5 à 10,
R est un propyle et R' est de l'hydrogène, et
AO est CH₂CH₂O.

9. La formulation selon l'une quelconque des revendications 1 à 8 comprenant plus d'un biocide.

10. La formulation selon les revendications 1 à 9 comprenant en outre un ou plusieurs biocides supplémentaires sélectionnés parmi du bronopol, de la méthylisothiazolinone (MIT), de la chlorométhylisothiazolinone (CMIT), du glutaraldéhyde, de l'orthophénylphénol, du brome contenant des biocides, ou des libérateurs de formaldéhyde tels que des N- et O-formals, et des mélanges de deux ou de ces biocides ou plus.

11. Une méthode pour réaliser la formulation de la revendication 1, la méthode comprenant :
le fait d'ajouter le biocide au polyglycol pour former un mélange, et
le fait d'agiter le mélange de biocide et de polyglycol.

12. Une méthode pour inhiber la croissance de microorganismes dans un système de base aqueuse, la méthode comprenant le fait d'ajouter audit système une quantité efficace d'une formulation selon l'une quelconque des revendications 1 à 11.

13. Une méthode selon la revendication 12 dans laquelle le système de base aqueuse est sélectionné parmi des latex, des formulations de peinture, des revêtements, des boues minérales, des cosmétiques, des formulations de produit ménager ou de soin d'hygiène personnelle, des fluides d'usinage de métaux, et des échantillons d'usine de pâte et de papier.

14. Une formulation selon la revendication 1 dans laquelle le véhicule liquide est Me-O-(CH₂CH₂O)₁₆-H.
